## Europäisches Patentamt
## European Patent Office
## Office européen des brevets

(19)

(11) Veröffentlichungsnummer: **0 210 509**
**A1**

(12) # EUROPÄISCHE PATENTANMELDUNG

(21) Anmeldenummer: 86109577.6

(22) Anmeldetag: 12.07.86

(51) Int. Cl.⁴: **G 01 F 1/68**
G 01 F 23/22, G 01 N 27/14
G 01 N 27/18, G 01 P 5/12

(30) Priorität: 02.08.85 DE 3527868

(43) Veröffentlichungstag der Anmeldung:
04.02.87 Patentblatt 87/6

(84) Benannte Vertragsstaaten:
DE FR GB IT NL SE

(71) Anmelder: SCHMIDT FEINTECHNIK GMBH
Feldbergstrasse 1
D-7742 St. Georgen(DE)

(72) Erfinder: Schuhwerk, Roland
Eckenerstrasse 15
D-7994 Langenargen(DE)

(74) Vertreter: Patentanwälte Dipl.-Ing. Klaus Westphal Dr.
rer. nat. Bernd Mussgnug Dr. rer.nat. Otto Buchner
Waldstrasse 33
D-7730 VS-Villingen(DE)

(54) Verfahren zum Messen der Eigenschaften eines Fluids sowie Sensorelement zur Durchführung des Verfahrens.

(57) Zur Messung der Eigenschaften eines Fluids ist ein Verfahren beschrieben, bei welchem ein Sensorelement mit temperaturabhängigem elektrischen Widerstand mit dem Fluid in Wärmekontakt steht. Das Sensorelement, z. B. ein Halbleiter, ist während eines ersten, vorbestimmten und begrenzten Zeitintervalls stromdurchflossen und wird mit vorbestimmter elektrischer Leistung aufgeheizt. Während eines sich anschließenden vorbestimmten und begrenzten Zeitintervalles wird das Sensorelement gekühlt. Aus der Widerstandsänderung des Sensorelementes, welche dem Temperaturverlauf des Elementes während der Heizphase bzw. der Kühlphase entspricht, kann unmittelbar auf die Eigenschaften des Fluids, z. B. die Art, Zusammensetzung, Strömungsgeschwindigkeit bzw. Massenstrom oder auch das Niveau eines in einem Behälter befindlichen Fluids rückgeschlossen werden.

Fig.2a

Fig.2b

Dipl. Ing. Klaus Westphal

Dr. rer. nat. Bernd Mussgnug

Dr. rer. nat. Otto Buchner

P A T E N T A N W Ä L T E
European Patent Attorneys

Waldstrasse 33

D-7730 VS-VILLINGEN

Flossmannstrasse 30a

D-8000 MÜNCHEN 60

Telex ...
Telecop. 089-834 46 18
(CCITT 3) attention webu

**0210509**

u.z.: 102.187 Ausl.

Schmidt Feintechnik GmbH

Feldbergstr. 1

D-7742 St. Georgen/Schwarzwald

Verfahren zum Messen der Eigenschaften eines Fluids
sowie Sensorelement zur Durchführung des Verfahrens

Die Erfindung betrifft ein Verfahren zum Messen der
Eigenschaften eines Fluids sowie ein zur Durchführung
des Verfahrens geeignetes Sensorelement.

Unter Eigenschaften des Fluids seien insbesondere die
Art bzw. Zusammensetzung des Fluids, die Strömungsgeschwindigkeit bzw. der Massenstrom eines strömenden
Fluids oder das Niveau eines in einem Behälter
befindlichen Fluids verstanden.

Es sind Verfahren bekannt, bei welchen aus der Widerstandsänderung eines von elektrischem Strom durchflossenen Sensorelementes mit temperaturabhängigem Widerstand auf die Fluideigenschaft rückgeschlossen wird. Es
ist auch bekannt, als Sensorelement einen Halbleiter zu
verwenden.

Aus der DE-PS 813 968 ist beispielsweise eine derartige Anordnung zur Messung des Flüssigkeitsstandes bekannt, bei welcher ein Widerstandskörper mit großem, insbesondere negativem Temperaturkoeffizienten in wärmeaustauschender Berührung mit der Flüssigkeit steht. Bei Austauchen des Widerstandskörpers aus der Flüssigkeit erfolgt eine Änderung der Wärmeabfuhr, die eine Widerstandsänderung zur Folge hat. Diese Widerstandsänderung kann zur Erzeugung eines Steuersignales, z. B. eines Warnsignales, ausgenutzt werden.

Eine derartige Anordnung ist ungeeignet für quantitative Messungen sowie für dynamische Betriebsweise, also bei sich während der Messung ändernden Fluideigenschaften, insbesondere sich ändernder Temperatur.

Der vorliegenden Erfindung liegt die Aufgabe zugrunde, ein Verfahren auf der im Oberbegriff des Hauptanspruchs angegebenen Basis zu schaffen, mit welchem die Fluideigenschaften quantitativ gemessen werden können und das auch für dynamischen Betrieb geeignet ist.

Gelöst wird diese Aufgabe mit dem gemäß Anspruch 1 gekennzeichneten Verfahren.

Charakteristisch für dieses Verfahren ist, daß das Sensorelement derart bestromt ist, daß es abwechselnd geheizt und gekühlt und aus dem Verlauf der Heizkurve bzw. Abkühlungskurve Meßwerte hergeleitet werden, welche für die eingangs angegebenen Fluideigenschaften charakteristisch sind.

Zur Ermittlung der Aufheizgeschwindigkeit bzw. des Verlaufes der Heizkurve kann folglich die Widerstandsänderung des Sensorelementes schon während der Aufheizphase gemessen werden. Ebenso kann zur Ermittlung der Abkühlgeschwindigkeit, also der Abkühlungskurve, die Widerstandsänderung des Sensorelementes während der Kühlphase gemessen werden.

Nach einem einfach realisierbaren Vorschlag wird zur Ermittlung der Widerstandsänderung die Differenz der Widerstandswerte des Sensorelementes jeweils am Anfang und am Ende der Heiz- bzw. Kühlphase gemessen.

Vorteilhafter ist es, wie nach einem weiteren Vorschlag angegeben, zur Ermittlung der Widerstandsänderung die Steigung der Widerstandskurve in Abhängigkeit von der Zeit in einem vorgegebenen Zeitpunkt zu messen. Bei dieser Verfahrensweise beeinflußt die absolute Temperatur des zu untersuchenden Fluids nicht den Meßwert.

Zweckmäßig für Messung und Auswertung der Meßergebnisse ist, wenn das Zeitintervall der Heizphase und/oder Kühlphase mindestens so lang ist, daß sich Sensorelement und Fluid in einem stationären thermischen Gleichgewicht befinden.

Um die möglicherweise wechselnden Eigenschaften eines Fluids kontinuierlich zu erfassen, sollten sich einem weiteren Vorschlag der Erfindung Heizphasen- und Kühlphasenintervalle periodisch wiederholen.

Von den bekannten Verfahren unterscheidet sich das erfindungsgemäße vor allem dadurch, daß das Sensorelement abwechselnd aufgeheizt und gekühlt wird und selbst vorzugsweise während der Kühlphase als Meßelement geschaltet ist. Bei dieser Verfahrensweise wird das Element, das eine vorbestimmte Wärmekapazität aufweist, auf eine vorbestimmte Temperatur aufgeheizt, worauf anschließend nach Beendigung des Aufheizvorganges aus dem Verlauf der Abkühlungskurve für das Fluid charakteristische Daten hergeleitet werden.

Der Verlauf dieser Abkühlungskurve ist hierbei wesentlich durch Art und Zustand des Fluids bestimmt.

Bei stehendem Fluid kann das Fluidniveau, also z. B. die Füllstandshöhe in einem Behälter, gemessen oder überwacht werden.

Bei einem Massenstrom kann bei wechselnder Strömungsgeschwindigkeit diese Strömungsgeschwindigkeit laufend erfaßt werden.

Bei gleichbleibender Strömung kann dagegen die Fluidart bestimmt werden, da für jede Fluidart eine bestimmte Abkühlungskurve charakterisch ist.

Darüber hinaus ist es bei Kenntnis der Abkühlungskurven bestimmter Fluidarten möglich, aus diesen auf die Zusammensetzung eines Fluidgemisches rückzuschließen.

In entsprechender Weise kann anhand der Abkühlungskurve auf etwaige Verschmutzungen und damit den Verschmutzungsgrad eines Fluids rückgeschlossen werden.

Als Sensorelement eignet sich vorzugsweise ein aus Halbleitermaterial bestehendes, vom elektrischen Strom aufheizbares Element mit wenigstens einem für Temperaturmessung geeigneten pn-Übergang. Damit ist mit demselben Element Aufheizen und Messen möglich. Die Verwendung von Halbleitermaterial hat den besonderen Vorteil, daß Sensorelemente kleinster Abmessungen auf einfache und kostengünstige Art hergestellt werden können, wobei Temperaturen bis zu 300°C ohne Glüheffekte oder dergl. erreicht werden können. Sensorelemente dieser Art können folglich unter schwierigen Verhältnissen zuverlässig eingesetzt werden.

Dieses Halbleiterelement kann, wie ferner vorgeschlagen ist, als Sperrschicht- oder MOS-Feldeffekttransistor ausgebildet sein.

Nach einem weiteren Vorschlag der Erfindung ist es ratsam, dieses Sensorelement in einem wärmeleitenden, jedoch fluiddichten Gehäuse zu kapseln.

Das erfindungsgemäße Verfahren ist nachfolgend anhand schematischer in der Zeichnung wiedergegebener Darstellungen näher erläutert. In diesen Zeichnungen zeigen

Figur 1   –   schematische Darstellung eines erfindungsgemäßen Sensorelementes, das als Meßsonde in einer fluiddurchströmten Leitung angeordnet ist,

Figur 2a   –   Diagramm des der Aufheizung des Sensorelementes dienenden Stromes I in Abhängigkeit von der Zeit t.

Figur 2b   –   Temperatur T des Sensorelementes in Abhängigkeit von der Zeit t, bei Bestromung mit Stromimpulsen gemäß Figur 2a.

Als Sensorelement zur Durchführung des erfindungsgemäßen Verfahrens eignet sich grundsätzlich jeder elektrische Leiter, der durch Stromwärme aufheizbar ist und dessen elektrischer Widerstand von der Temperatur abhängig ist, so daß seine Widerstandsänderung ein Maß für die Temperaturänderung ist.

Vorzugsweise eignet sich als Sensorelement ein aus Halbleitermaterial bestehendes Element, das stromdurchflossen ist. Als Halbleiterelement kann eine einfache Diode mit pn-Übergang oder auch nur eine einfache Halbleiterstrecke Verwendung finden. Dieses Halbleiterelement ist während der Heizphase zu bestromen, während es zur Messung der Temperaturänderung in eine geeignete Meßschaltung zu schalten ist. Zweckmäßigerweise findet als Heizelement ein stromdurchflossenes Halbleiterelement Verwendung, das mit einer Steuerstrecke kombiniert ist. Bevorzugt ist hierbei ein Sperrschichtfeldeffekttransistor.

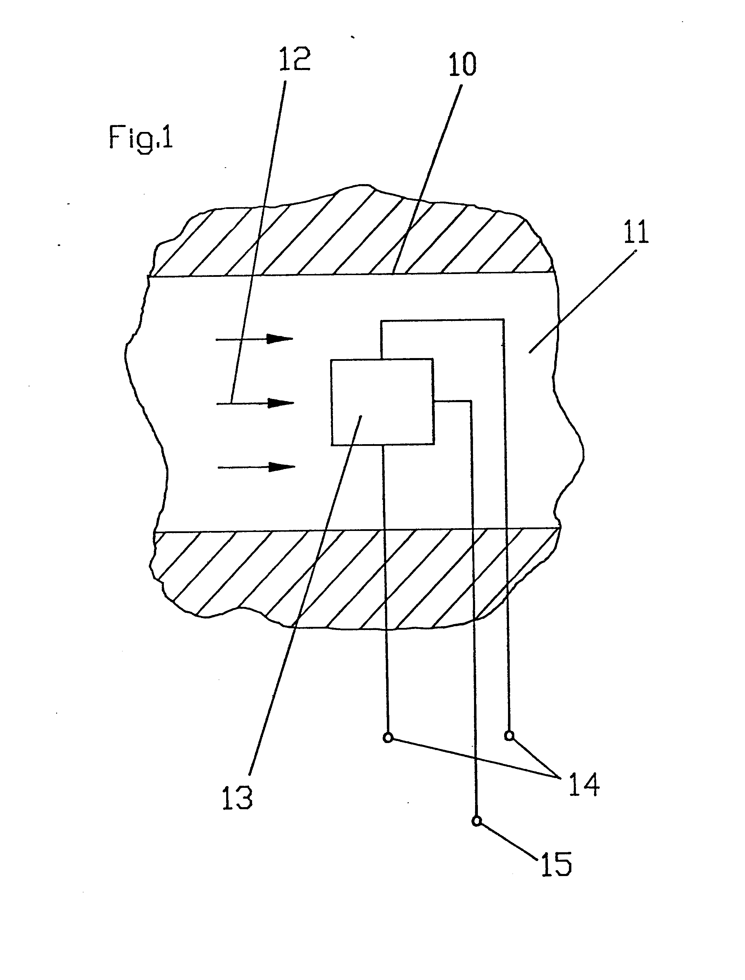

In Figur 1 ist schematisch ein Anwendungsfall gezeigt. Mit 10 sei ein Ausschnitt einer von einem Fluid durchströmten Rohrleitung gezeigt. Im Inneren 11 dieser Rohrleitung 10 ist ein Sensorelement nach der Erfindung so angeordnet, daß es von dem in Richtung der Pfeile 12 strömenden Fluid umströmt ist. Zweckmäßigerweise ist das Sensorelement 13 wärmeleitend jedoch fluiddicht gekapselt.

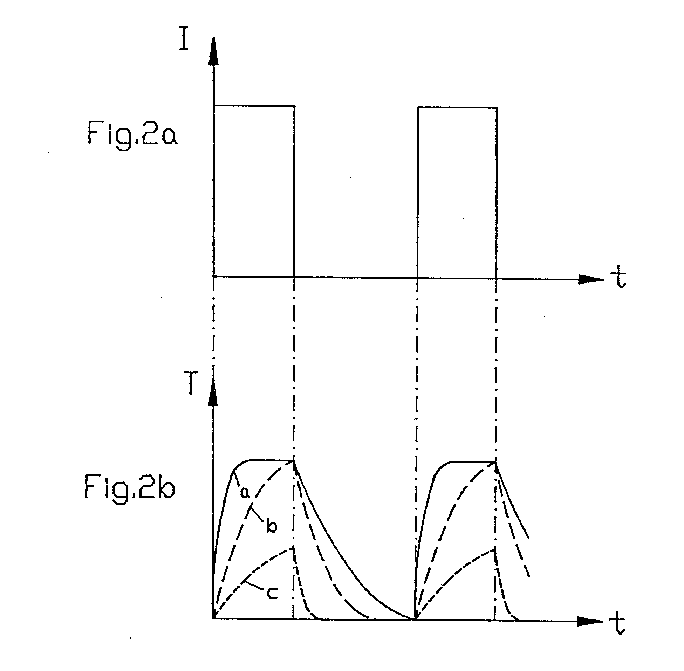

Zu Meßzwecken werden diesem Sensorelement 13 über die Leitungen 14 Stromimpulse in einem vorbestimmten und begrenzten Zeitintervall zugeleitet, wie dies mit dem Diagramm gemäß Figur 2a veranschaulicht ist. Die Zeitintervalle sind so bemessen, daß das Sensorelement, wie mit Figur 2b veranschaulicht ist, auf eine vorbestimmte Temperatur aufheizbar ist Kurven a, b in Fig. 2 b. Mittels eines über die Gate-Leitung 15 eingespeisten Steuerstromes kann die Heizleistung und damit die Endtemperatur eingestellt werden. Nach Beendigung des Heizintervalles, also zwischen zwei Stromimpulsen, während der sogenannten Kühlphase, kühlt das Sensorelement 13, das eine bestimmte Wärmekapazität hat, ab. Der Verlauf der aus Figur 2b während der Kühlphase ersichtlichen Abkühlungskurve hängt von Eigenschaften des Fluids, insbesondere der Fluidart und der Strömungsgeschwindigkeit, weitgehend ab. Diese Abkühlungskurve kann durch Messung der Widerstandsänderung des Sensorelementes während der Kühlphase gemessen und zur Anzeige bzw. Aufzeichnung gebracht werden. Zu diesem Zweck ist an die Leitungen 14 und 15 eine geeignete Meßschaltung anzuschließen.

Aus dem Verlauf der Abkühlungskurve kann auf Strömungsgeschwindigkeit und damit auf den die Leitung durchfließenden Massenstrom rückgeschlossen werden. Folglich eignet sich eine derartige Anordnung entweder zur Bestimmung der Strömungsgeschwindigkeit oder auch zur Bestimmung des Fluidverbrauches.

Bei konstanter Strömungsgeschwindigkeit in der Leitung 10 kann durch Analyse der Abkühlungskurven auf Art bzw. Zusammensetzung des Fluids in gleicher Weise geschlossen werden, da jede Fluidart eine spezifische Wärmeleitfähigkeit besitzt, die bei vorbestimmter Strömungsgeschwindigkeit zu einer vorbestimmten Abkühlungskurve, die mit dem Sensorelement 13 ermittelbar ist, führt.

Handelt es sich hierbei um ein Fluidgemisch mit vorbestimmter Strömungsgeschwindigkeit und sind die spezifischen Wärmeleitfähigkeiten der Fluidbestandteile bekannt, so läßt sich mit Hilfe dieser Messung auch die Zusammensetzung oder das Mischungsverhältnis des Fluidgemisches bestimmen.

Schließlich ist es mit der gleichen Methode möglich, die Verschmutzung des Fluids, z. B. bei hydraulischen Kreisen, durch Fremdstoffe festzustellen. Die in Figur 2b mit b und c bezeichneten Kurven veranschaulichen die unterschiedlichen Endtemperaturen bei Fluids mit unterschiedlichen Mischungsverhältnissen.

Die Auswerteelektronik kann sowohl mit dem Halbleiterplättchen des Sensorelementes integriert als auch, was bei höheren Temperaturen möglicherweise ratsam ist, getrennt vorgesehen sein.

Die Bestimmung der Temperaturänderung während der Kühlphase, als die Messung der Abkühlgeschwindigkeit, reicht in vielen Anwendungsfällen, insbesondere bei statischen Verhältnissen. Es kann aber auch von Vorteil sein, stattdessen die Aufheizkurve der Meßsonde zu erfassen. Wie mit den Kurven a, b und c in Figur 2b während der Heizphase veranschaulicht ist, hängt deren Verlauf auch genauso wie der Verlauf der Abkühlkurve von den Eigenschaften des Fluids ab.

Eine Auswertung dieser Kurven kann unter dynamischen Verhältnissen besonders nützlich sein. Hierbei ist ein periodisch intermittierender Betrieb, bei welchem das
Sensorelement während der Heizphase aufgeheizt wird und
während der Kühlphase als Meßelement dient, besonders
vorteilhaft.


Bei Anordnung mehrerer, nahezu punktförmig ausbildbarer
Sensorelemente der erfindungsgemäßen Art nach einem
vorbestimmten Muster lassen sich Unterschiede in einem
strömenden Medium, z. B. Strömungsunterschiede wie
Übergänge laminarer Strömung in Turbulenz oder Abreißströmungen, gut erfassen.

Dipl. Ing. Klaus Westphal
Dr. rer. nat. Bernd Mussgnug

Dr. rer. nat. Otto Buchner
P A T E N T A N W Ä L T E
European Patent Attorneys

Waldstrasse 33

D-7730 VS-VILLINGEN

Flossmannstrasse 30a

D-8000 MÜNCHEN 60

Telefon 07721 56007
Telegr. Westbuch Villingen
Telex 1777 21217 wemu d
wemu d

Telefon 089-832446
Telegr. Westbuch Munchen
Telex 5213177 webu d
Telecop. 089-834 46 18
(CCITT 3) attention webu

0210509

1

u.Z.: 102.187 Ausl.

P A T E N T A N S P R Ü C H E

1. Verfahren zum Messen der Eigenschaften eines Fluids, insbesondere der Art, der Zusammensetzung, der Strömungsgeschwindigkeit bzw. des Massenstromes oder des Niveaus eines Fluids unter Verwendung eines mit dem Fluid in Wärmekontakt stehenden, von elektrischem Strom durchflossenen Sensorelementes mit temperaturabhängigem elektrischem Widerstand, dadurch gekennzeichnet, daß das Sensorelement während eines ersten vorbestimmten und begrenzten Zeitintervalls, der Heizphase, mit vorbestimmter elektrischer Leistung aufgeheizt, daß das Sensorelement während eines sich anschließenden, vorbestimmten und begrenzten Zeitintervalls, der Kühlphase, abgekühlt wird und daß die Widerstandsänderung des Sensorelementes mindestens während einer der beiden Phasen gemessen wird.

2. Verfahren nach Anspruch 1, dadurch gekennzeichnet, daß zur Ermittlung der Aufheizgeschwindigkeit die Widerstandsänderung des Sensorelementes während der Heizphase gemessen wird.

3. Verfahren nach Anspruch 1, dadurch gekennzeichnet, daß zur Ermittlung der Abkühlgeschwindigkeit die Widerstandsänderung des Sensorelementes während der Kühlphase gemessen wird.

4. Verfahren nach Anspruch 1, 2 oder 3, dadurch gekennzeichnet, daß das Zeitintervall der Heizphase und/oder Kühlphase mindestens so lang ist, daß sich Sensorelement und Fluid in einem stationären thermischen Gleichgewicht befinden.

5. Verfahren nach nur einem der Ansprüche 1 bis 4, dadurch gekennzeichnet, daß sich Heizphasen - und Kühlphasenintervall periodisch wiederholen.

6. Verfahren nach einem der Ansprüche 1 bis 5, dadurch gekennzeichnet, daß zur Ermittlung der Widerstandsänderung die Steigung der Widerstandskurve in Abhängigkeit von der Zeit in einem vorgegebenen Zeitpunkt gemesssen wird.

7. Verfahren nach einem der Ansprüche 1 bis 5, dadurch gekennzeichnet, daß zur Ermittlung der Widerstandsänderung die Differenz der Widerstandswerte des Sensorelementes am Anfang und Ende der Heiz- bzw. Kühlphase gemessen wird.

8. Sensorelement zur Durchführung des Verfahrens nach einem der Ansprüche 1 bis 7, dadurch gekennzeichnet, daß es aus durch elektrischen Strom aufheizbaren Halbleitermaterial besteht und wenigstens einen für Temperaturmessung geeigneten pn-Übergang aufweist.

9. Sensorelement nach Anspruch 8, dadurch gekennzeichnet, daß es als Sperrschicht - oder MOS-Feldeffekttransistor ausgebildet ist.

10.Sensor nach Anspruch 8 oder 9, gekennzeichnet durch
die Anordnung in einem wärmeleitenden, jedoch fluiddichten Gehäuse.

Fig.1

0210509

1/2

Fig.2a

Fig.2b

# EUROPÄISCHER RECHERCHENBERICHT

## EINSCHLÄGIGE DOKUMENTE

EP 86109577.6

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | DE - A1 - 2 939 355 (GUSTAV F. GERDTS) <br> * Seite 4, letzter Absatz – Seite 7; Fig. * | 1-3,5-7 | G 01 F 1/68 <br> G 01 F 23/22 <br> G 01 N 27/14 <br> G 01 N 27/18 <br> G 01 P 5/12 |
| Y | -- | 8-10 | |
| Y | DE - A1 - 3 048 096 (ELUW) <br> * Seite 8, Zeilen 3-17; Fig. * | 8-10 | |
| | -- | | |
| X | GB - A - 1 345 324 (NATIONAL RE-SEARCH) <br> * Seite 1, Zeile 55 – Seite 2, Zeile 87; Fig. 1,2 * | 1,2,5-7 | |
| A | | 4 | |
| Y | -- | 8,9 | |
| Y | GB - A - 2 138 566 (STANDARD) <br> * Zusammenfassung * | 8,9 | |
| | -- | | |
| A | US - A - 4 501 145 (BOEGLI) <br> * Gesamt * | 1-5 | |
| | -- | | |
| A | GB - A - 2 046 919 (EMHART) <br> * Deckblatt * | 1-5,7, 8 | |
| | -- | | |
| A | EP - A1 - 0 139 874 (VDO) <br> * Zusammenfassung; Fig. 1,2 * | 1-3,5, 7 | |
| | ---- | | |

### RECHERCHIERTE SACHGEBIETE (Int. Cl.4)

G 01 F 1/00
G 01 F 23/00
G 01 N 27/00
G 01 P 5/00

Der vorliegende Recherchenbericht wurde für alle Patentansprüche erstellt.

| Recherchenort | Abschlußdatum der Recherche | Prüfer |
|---|---|---|
| WIEN | 15-10-1986 | BURGHARDT |

EPA form 1503 03 82